# EUROPEAN PATENT SPECIFICATION

(11) **EP 0 554 753 B1**
(45) Date of publication and mention of the grant of the patent: **17.04.1996**
(21) Application number: 93101084.7
(22) Date of filing: 25.01.1993
(51) Int. Cl.: B65B 61/00, B65G 17/18

(54) **Output conveyor for cigarette packaging machines for rigid hinged-lid packages**
Abführförderer für Zigarettenverpackungsmaschinen für steife mit Scharnierdeckel versehene Verpackungen
Convoyeur de sortie pour machines d'emballage de cigarettes pour des emballages rigides avec couvercle à charnière

(30) Priority: 03.02.1992 IT BO920031
(43) Date of publication of application: 11.08.1993
(73) Proprietor: G.D SOCIETA' PER AZIONI, I-40133 Bologna (IT)
(72) Inventor: Merloni, Claudio, I-40100 Bologna (IT); Gamberini, Antonio, I-40100 Bologna (IT)
(74) Representative: Jorio, Paolo

(56) References cited:
- CH-A- 399 984
- GB-A- 2 252 541

## Description

The present invention relates to an output conveyor for rigid, hinged-lid cigarette packing machines.

Document GB-A-2 252 541 relates to a packing machine by which groups of cigarettes, normally consisting of twenty cigarettes arranged in three layers and wrapped in foil, are fed successively, together with respective blanks, into respective pockets on a packing wheel and along a folding path along which the blanks are gradually folded about the respective groups.

Each group inside the almost finished rigid pack is fed to the input station of an output conveyor by which the packs are fed successively to the input of a stabilizing or drying conveyor on the packing machine. As it is transferred from the packing wheel to a respective seat on the output conveyor, each pack undergoes a finish folding operation whereby the as yet unfolded lateral tabs on the blank are folded backwards and outwards of the seat.

At an unloading station at the input of the stabilizing conveyor, each pack is expelled outwards of the seat and towards the input of the stabilizing conveyor.

A drawback of the above known output conveyor is that the packets inside the seats on the conveyor are expelled with said lateral tabs frontwards. Since these, as stated above, are the last to be folded and may not yet adhere perfectly to the rest of the pack, expulsion of the pack from the seat may result in rearward slippage or curling of the tabs in turn resulting in rejection of the finished pack.

It is an object of the present invention to perfect the above known output conveyor so as to eliminate the aforementioned drawback.

According to the present invention, there is provided an output conveyor for rigid, hinged-lid cigarette packing machines, the conveyor being an annular conveyor comprising an input station for receiving the packs; an unloading station for unloading the packs off the conveyor; a number of seats, each for receiving a respective pack at the input station; connecting means for connecting each seat to the conveyor in a respective position of the conveyor itself; first pushing means for pushing each pack into a respective seat at the input station and in a substantially radial first direction in relation to the conveyor itself; and second pushing means for pushing each pack out of the respective seat at the unloading station and in a substantially radial second direction in relation to the conveyor itself; characterized by the fact that the connecting means and the pushing means are designed so that the pushing means face a same side of each seat, and the first and second directions are orientated in a same sense in relation to each seat; the loading of each pack into the respective seat and the unloading thereof from said seat resulting, in use, in the pack travelling through the seat under the action of said pushing means.

According to a preferred embodiment of the conveyor set forth above, the connecting means provide for rotating each seat in relation to the conveyor itself and about a respective axis extending perpendicular to the conveyor; turnover means being provided for rotating each seat between an original position wherein said pack is received at said input station, and an overturned position wherein said seat is turned 180° as it travels between said input and unloading stations.

The invention will now be described by way of example with reference to the accompanying drawings, in which:
Fig.1 shows a schematic view in perspective, with parts removed for clarity, of a preferred embodiment of the output conveyor according to the present invention;
Fig.2 shows a larger-scale, schematic view of a detail in Fig.1;
Fig.3 shows a larger-scale detail in Fig.2;
Fig.4 shows a larger-scale section along line IV-IV in Fig.2;
Fig.5 shows a plan view of a detail in Fig.4.

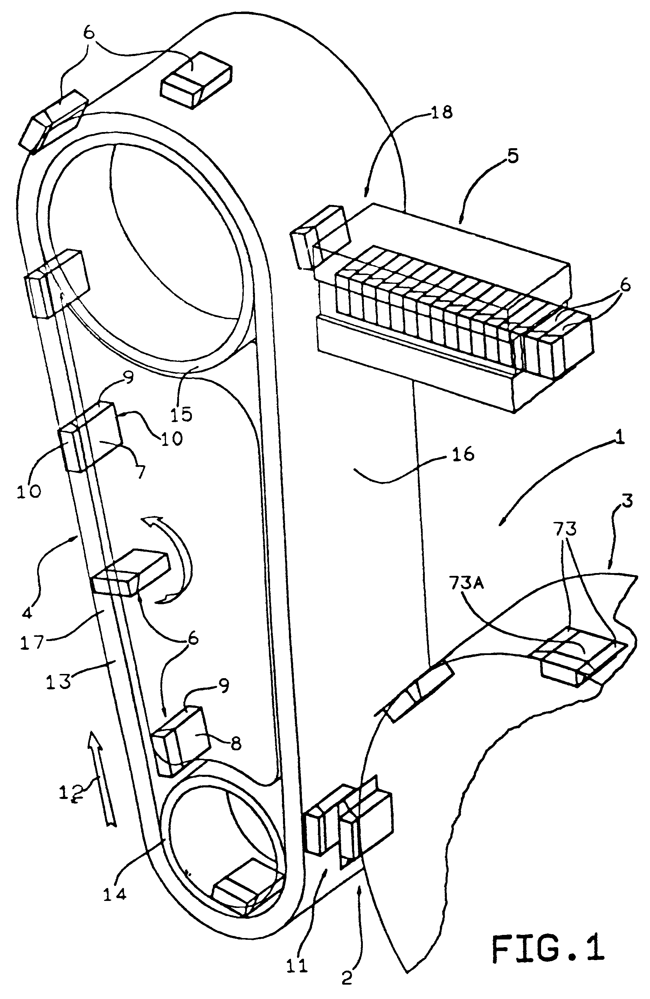

Number 1 in Fig.1 indicates a cigarette packing machine as described in Italian Patent Application N. BO91A 000019, to which full reference is made herein in the interest of full disclosure.

Machine 1 comprises an output portion 2, in turn comprising a known packing wheel 3, an annular or loop conveyor 4, and a stabilizing or drying conveyor 5.

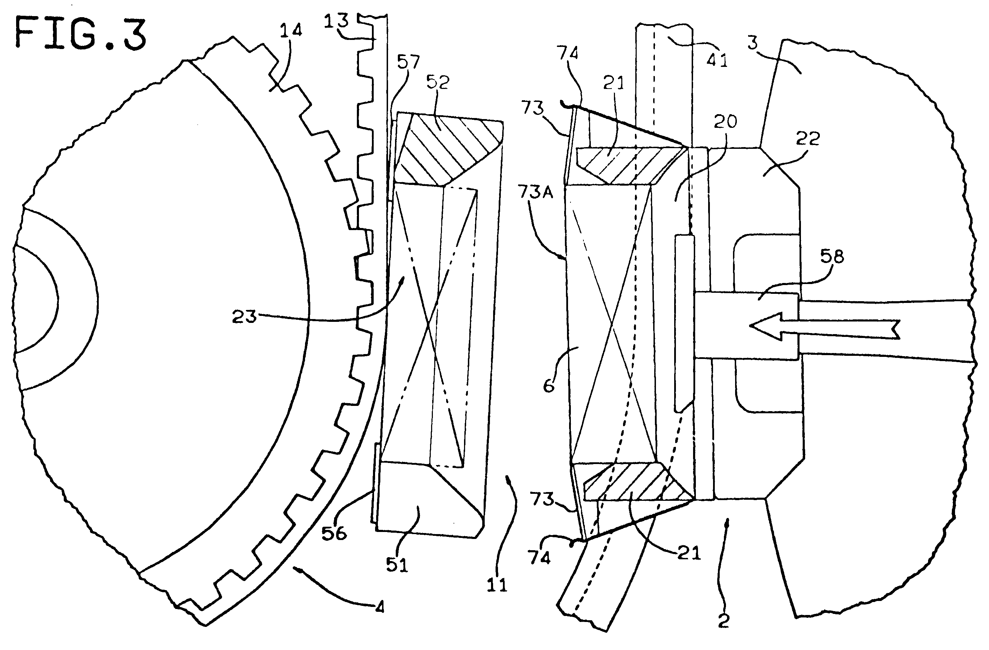

As shown, particularly in Fig.3, packing wheel 3 rotates about its axis (not shown) at a substantially constant surface speed V1, for producing rigid, hinged-lid packs 6 in the form of a rectangular parallelepipedon and each presenting two large lateral surfaces 7 and 8, two small lateral surfaces 9, and two end surfaces 10.

As shown in Fig.1, packs 6 are fed successively from packing wheel 3 to input station 11 of conveyor 4, and along conveyor 4 with one of surfaces 9 facing frontwards, at a given substantially constant speed, and in direction 12 perpendicular to lateral surfaces 9.

Input station 11 is substantially as described and claimed in Italian Patent Applications N. BO91A 000283 and BO91A 000284, to which full reference is made herein in the interest of full disclosure.

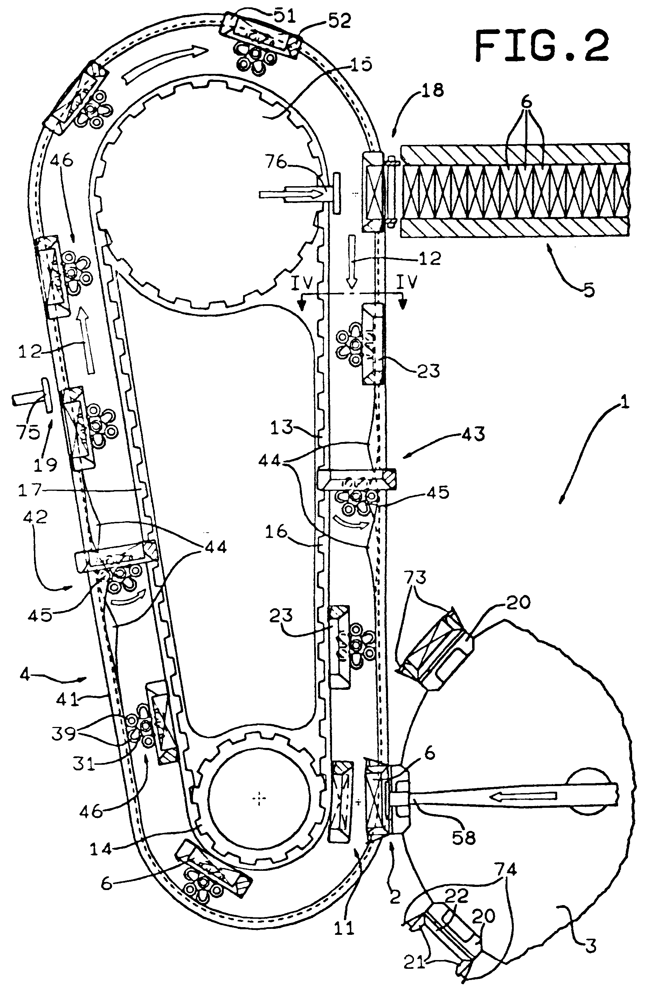

As shown, particularly in Fig.2, conveyor 4, which may be a conveying wheel (not shown) comprises a belt 13 looped about a top and bottom pulley 15 and 14 (Fig.1) and having two straight branches 16 and 17. Branch 16 facing packing wheel 3 travels downwards (in Fig.2) at a speed V2 substantially equal, in absolute value, to speed V1, and presents a bottom portion tangent to packing wheel 3 at input station 11, and a top portion extending through an unloading station 18 wherein packs 6 are transferred from conveyor 4 to conveyor 5.

Unloading station 18 is substantially as described and claimed in Italian Patent Application N. BO91A 000285, to which full reference is made herein in the interest of full disclosure.

Branch 17 travels upwards (in Fig.2) and extends through a reject station 19.

The outer periphery of wheel 3 presents a number of equally-spaced through pockets 20, each designed to receive a respective pack 6, and each defined laterally by two shoulders 21 extending axially in relation to wheel 3. Shoulders 21 are supported by a base plate 22 connected integral with an end surface of wheel 3, and project radially outwards in relation to wheel 3.

As wheel 3 rotates about its axis, pockets 20 are fed along a curved, more specifically circular, path substantially tangent, at input station 11, to the substantially straight path of a number of seats 23 spaced along belt 13 with the same spacing as pockets 20.

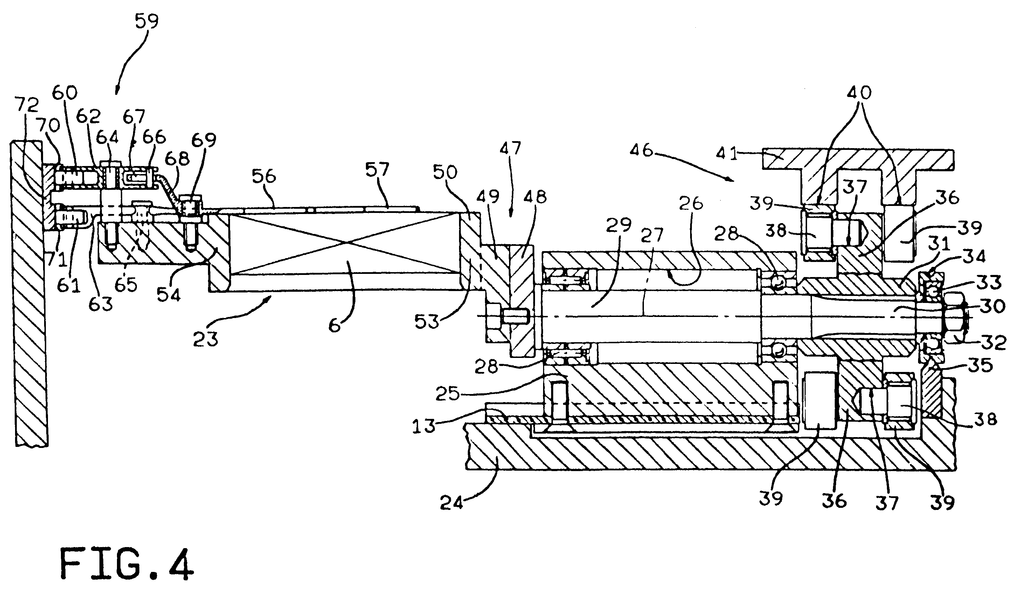

As shown in Fig.4, belt 13 presents its inner surface facing and contacting a guide plate 24, and, at each seat 23, is fitted integral on the outer surface with a block 25 having a through hole 26 with its axis 27 parallel to the plane of belt 13 and perpendicular to direction 12.

Hole 26 is fitted through in rotary manner, via the interposition of bearings 28, with a shaft 29 coaxial with axis 27 and having an end portion 30 projecting outwards of block 25. Portion 30 is fitted with a hub 31 fixed axially on to shaft 29 by a nut 32 which grips the inner ring of a bearing 33 against hub 31. The outer ring of bearing 33 presents an annular groove 34 engaged by a supporting and guide blade 35 fitted to plate 24 and extending parallel to direction 12.

From the outer surface of hub 31, there extend outwards six radial appendixes 36 equally spaced about hub 31. The end portion of each radial appendix 36 presents a dead hole 37 facing the opposite way to the adjacent hole 37 and engaged by a respective pin 38, the end of which projecting from hub 31 is fitted in rotary manner with a tappet roller 39 cooperating with a respective surface 40 of a fixed cam 41. As shown in Fig.2, cam 41 presents two switch portions 42 and 43 located respectively between input and reject stations 11 and 19, and between unloading and input stations 18 and 11. At each portion 42, 43, one of surfaces 40 presents two successive projections 44, while the other presents only one projection 45 located between projections 44. When travelled over by rollers 39, projections 44 and 45 of each portion 42, 43 are so designed as to rotate shaft 29 by 180° about axis 27.

In other words, each hub 31, together with respective appendixes 36 and tappet rollers 39, constitutes a turnover device for each shaft 29, whereby shaft 29 is first rotated 180° as it travels between input station 11 and reject station 19, and is then rotated a further 180° back to its original position as it travels between unloading station 18 and input station 11.

In addition to supporting respective turnover device 46, each shaft 29 also forms part of a device 47 for connecting a respective seat 23 to belt 13.

In addition to respective shaft 29, each device 47 also comprises an eccentric disk 48 integral with the opposite end of shaft 29 to that fitted with hub 31, and itself fitted with a lateral bracket 49 connected to an annular frame 50 of a respective seat 23.

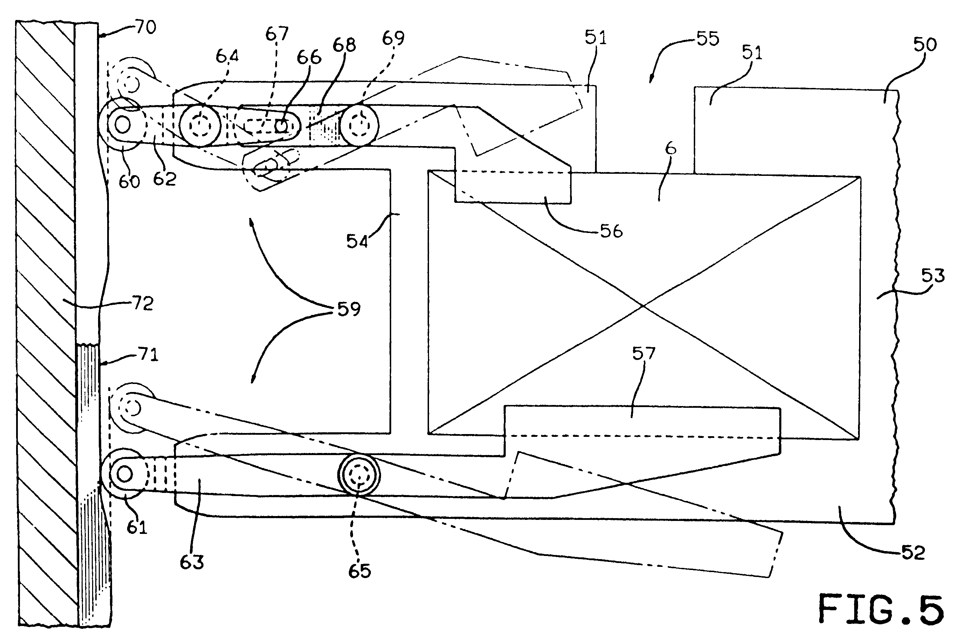

Like pockets 20, frame 50 of each seat 23 is defined laterally by two shoulders 51 and 52 parallel to shoulders 21 and connected to each other by two cross members 53 and 54, the first of which is connected integral with bracket 49. More specifically, frame 50 is normally positioned parallel to the portion of belt 13 to which respective block 25 is connected, and, at input station 11, is positioned with shoulder 51 forwards. As shown in Fig.5, shoulder 51 presents a central opening 55 dividing it into two separate portions, each integral with a respective cross member 53, 54.

On the opposite surface to that facing wheel 3 in station 11, each frame 50 presents two plates 56 and 57, which, in the normal operating position, project inwards of respective seat 23 from shoulders 51 and 52, so as to arrest a respective pack 6 pushed through seat 23 at station 11 by a push device 58 fitted in known manner to wheel 3.

As shown in Fig.s 4 and 5, cross member 54 of each frame 50 is fitted with an actuating device 59 for moving plates 56 and 57 between said operating position and a parted position outwards of the opening of seat 23. Actuating device 59 comprises two tappet rollers 60 and 61 mounted for rotation on one end of respective rocker arms 62 and 63 pivoting respectively at 64 and 65 on respective cross members 51 and 52 via the interposition of helical return springs (not shown). Rocker arm 62 is substantially aligned with shoulder 51, and presents, on the opposite end to that fitted with roller 60, a pin 66 constituting a link sliding along a groove 67 formed axially along a first arm of a further rocker arm 68 pivoting at 69 on shoulder 51 and having a second arm fitted integral with plate 56. Rocker arm 63 is substantially aligned with shoulder 52, and is fitted integral with plate 57 on the end opposite that fitted with roller 61. Both rollers 60 and 61 roll in contact with respective surfaces 70 and 71 of a fixed cam 72 extending laterally in relation to unloading station 18 and so designed as to maintain plates 56 and 57 in the parted position as frame 50 travels through station 18.

In actual use (Fig.3), each pack 6 is transferred, partially folded, from wheel 3 to input station 11, by virtue of the finish folding operation being performed as pack 6 is transferred from wheel 3 to conveyor 4. More specifically, each pack 6 is formed from a blank 73a having two longitudinal tabs 73 which, as pack 6 approaches station 11, still extend outwards of shoulders 21 and are supported in this position by respective elastic arms 74.

As packet 6 on wheel 3 approaches station 11, push device 58 is activated in known manner (not shown) so as to expel pack 6 from respective pocket 20 in a first substantially radial direction; insert it into seat 23 travelling simultaneously with pocket 20 through station 11; and fold tabs 73 upon these contacting shoulders 51 and 52 of seat 23.

On receiving pack 6 at station 11, each seat 23 travels downwards (in Fig.2), about bottom pulley 14, and then upwards towards reject station 19. As it does so, each frame 50 is locked angularly, so that it lies parallel to belt 13 at the point of connection to the same, by respective turnover device 46, a pair of adjacent rollers 39 of which is positioned contacting each of surfaces 40 of fixed cam 41, which follows the path of belt 13 up to switch portion 42. Engagement of each of projections 44 and 45 by rollers 39 moves respective hub 31 one step about axis 27, so that, downstream from switch portion 42, hub 31 is moved three steps of 60° each, making a total of 180°. In other words, on reaching reject station 19, each seat 23 is turned over 180° in relation to belt 13 and in relation to its original position at input station 11.

Reject station 19 comprises, in known manner, a push device 75 located outwards of belt 13 and which, when activated, expels pack 6 from respective seat 23 and inwards of belt 13 towards a collecting device (not shown).

In connection with the above, it should be pointed out that, when seat 23 is in the overturned position, tabs 73 of respective pack 6 are oriented towards belt 13. Consequently, on seat 23 reaching unloading station 18, still in the overturned position, activation of a known push device 76 in a second substantially radial direction for expelling pack 6 outwards towards the input of conveyor 5 results in pack 6 being moved, in relation to seat 23, in the same direction and sense as those in which pack 6 moved when pushed by push device 58 at input station 11. In other words, push devices 58 and 76 face, upon activation, the same side of seat 23 so that each pack 6 travels through the relevant seat 23 always in a same direction under the action of push devices 58 and 76.

Owing to the above, the friction between tabs 73 and frame 50 is always directed in a same direction, and provides for maintaining tabs 73 in the correct downfolded position, by virtue of tabs 73 facing the opposite way to the direction in which pack 6 travels through seat 23.

Subsequently, on turnover device 46 engaging switch portion 43 of fixed cam 41, frame 50 is restored to its original position prior to seat 23 reaching input station 11.

## Claims

1. An output conveyor (4) for rigid, hinged-lid cigarette packing machines (1), the conveyor (4) being an annular conveyor comprising an input station (11) for receiving the packs (6); an unloading station (18) for unloading the packs (6) off the conveyor (4); a number of seats (23), each for receiving a respective pack (6) at the input station (11); connecting means (47) for connecting each seat (23) to the conveyor (4) in a respective position of the conveyor (4) itself; first pushing means (58) for pushing each pack (6) into a respective seat (23) at the input station (11) and in a substantially radial first direction in relation to the conveyor (4) itself; and second pushing means (76) for pushing each pack (6) out of the respective seat (23) at the unloading station (18) and in a substantially radial second direction in relation to the conveyor (4) itself; characterized by the fact that the connecting means (47) and the pushing means (58,76) are designed so that the pushing means (58,76) face a same side of each seat (23), and the first and second directions are orientated in a same sense in relation to each seat (23); the loading of each pack into the respective seat and the unloading thereof from said seat resulting, in use, in the pack (6) travelling through the seat (23) under the action of said pushing means (58,76).

2. A conveyor as claimed in Claim 1, characterized by the fact that the connecting means (47) provide for rotating each seat (23) in relation to the conveyor (4) itself and about a respective axis (27) extending perpendicular to the conveyor (4); turnover means (46) being provided for rotating each seat (23) between an original position wherein said pack (6) is received at said input station (11), and an overturned position wherein said seat (23) is turned 180° as it travels between said input and unloading stations (11, 18).

3. A conveyor as claimed in Claim 2 comprising said annular conveying member (13) for the seats (23), characterized by the connecting means (47) comprising, for each seat (23), supporting means (25) integral with the annular conveying member (13); and a shaft (29) perpendicular to a travelling direction (12) of the seats (23); the shaft (29) being coaxial with said axis (27) and connected to the supporting means (25) so as to rotate about said axis (27).

4. A conveyor as claimed in Claim 3, characterized by the fact that the annular conveying member (13) is an axially-moving belt (13); the shaft (29) being parallel to a plane tangent to said belt (13).

5. A conveyor as claimed in Claim 3 or 4, characterized by the fact that each seat (23) comprises a frame (50) connected integral with a respective said shaft (29) so as to rotate, with said shaft (29), about said respective axis (27).

6. A conveyor as claimed in any one of Claims 2 to 5, characterized by the fact that, for each seat (23), the turnover means (46) comprise a turnover device (46) mounted for rotation, with the seat (23), about said respective axis (27); cam means (41) being provided for rotating each turnover device (46) 180° about its axis (27).

7. A conveyor as claimed in Claim 5, characterized by the fact that, for each seat (23), the turnover means (46) comprise a turnover device (46) fitted to the respective shaft (29); cam means (41) being assigned to said turnover devices (46) and comprising a switch portion (42) cooperating with said turnover devices (46) for rotating same 180° about the respective axis (27).

8. A conveyor as claimed in Claim 6 or 7, characterized by the fact that each turnover device (46) comprises a hub (31) coaxial with said axis (27) and integral with the respective seat (23); six radial appendixes (36) equally spaced about and integral with the hub (31); and tappet means (39) fitted to each appendix (36) and cooperating with said cam means (41); said switch portion (42) comprising three successive projections (44, 45), engagement of each of which by the tappet means (39) provides, in use, for moving the appendixes (36) one step about said axis (27).

9. A conveyor as claimed in Claim 8, characterized by the fact that the cam means (41) comprise a further switch portion (43) cooperating with the tappet means (39) of each seat (23) so as to further rotate each seat (23) by 180° and from said overturned position into said original position, as said seat (23) travels between the unloading station (18) and the input station (11).

10. A conveyor as claimed in any one of the foregoing Claims, characterized by the fact that each seat (23) comprises a frame (50) connected to the respective connecting means (47); the frame (50) being an annular frame (50) for housing a respective pack (6); and each frame (50) being provided with releasable stop means (56, 57) for axially arresting said pack (6).

11. A conveyor as claimed in Claim 10, characterized by the fact that said stop means (56, 57) comprise at least one plate (56, 57) fitted in movable manner to the frame (50) and on a side of the frame (50) facing outwards of the conveyor itself when the respective seat (23) is in the overturned position; actuating means (59) being provided for moving the plate (56, 57) between a first operating position wherein the plate (56,57) interferes axially with a respective pack (6), and a second position wherein the plate (56, 57) permits free passage of the pack (6) through the seat (23).

## Patentansprüche

1. Abführförderer (4) für Zigarettenverpackungsmaschinen (1) für steife, mit Scharnierdeckel versehene Packungen, wobei der Förderer (4) ein ringförmiger Förderer ist mit einer Eingangsstation (11) zum Aufnehmen der Packungen (6), einer Entladestation (18) zum Entladen der Packungen (6) von dem Förderer (4), einer Anzahl von Sitzen (23) zum jeweiligen Aufnehmen einer entsprechenden Packung (6) an der Eingangsstation (11), Verbindungsmitteln (47) zum Verbinden jedes Sitzes (23) mit dem Förderer (4) an einer entsprechenden Position des Förderers (4) selbst, ersten Schiebemitteln (58) zum Schieben jeder Packung (6) in einen entsprecheden Sitz (23) an der Eingangsstation (11) in einer bezüglich des Förderers (4) selbst im wesentlichen radialen ersten Richtung und zweiten Schiebemitteln (76) zum Schieben jeder Packung (6) aus dem entsprechenden Sitz (23) an der Entladestation (18) in einer bezüglich des Förderers (4) selbst im wesentlichen radialen zweiten Richtung, dadurch gekennzeichnet, daß die Verbindungsmittel (47) und die Schiebemittel (58, 76) so gestaltet sind, daß die Schiebemittel (58, 76) derselben Seite jedes Sitzes (23) gegenüberliegen und daß die ersten und zweiten Richtungen bezüglich jedem Sitz (23) gleich orientiert sind, wobei das Laden jeder Packung in den entsprechenden Sitz und ihr Entladen aus diesem Sitz im Gebrauch dazu führt, daß die Packung (6) unter Einwirkung der Schiebemittel (58, 76) den Sitz (23) durchquert.

2. Förderer nach Anspruch 1, dadurch gekennzeichnet, daß die Verbindungsmittel (47) dafür sorgen, daß jeder Sitz (23) bezüglich des Fördereres (4) selbst in einer sich senkrecht zum Förderer (4) erstreckenden Achse (27) rotiert wird, und daß Wendemittel (46) vorgesehen sind, um jeden Sitz (23) zwischen einer ursprünglichen Position, in der die Packung (6) an der Eingangsstation (11) aufgenommen wird, und einer umgedrehten Position zu drehen, in welcher der Sitz (23) um 180° gedreht ist, während er sich zwischen den Eingangs- und Entladestationen (11, 18) bewegt.

3. Förderer nach Anspruch 2, umfassend das ringförmige Fördererelement (13) für die Sitze (23), dadurch gekennzeichnet, daß die Verbindungsmittel (47) für jeden Sitz (23) mit dem ringförmigen Fördererelement (13) verbundene Lagermittel (25) und eine zu einer Bewegungsrichtung (12) der Sitze (23) senkrechte Welle (29) aufweisen, wobei die Welle (29) mit der Achse (27) koaxial und mit den Lagermitteln (25) verbunden ist, um so um die Achse (27) zu rotieren.

4. Förderer nach Anspruch 3, dadurch gekennzeichnet, daß das ringförmige Fördererelement (13) ein sich axial bewegender Gurt (13) ist, wobei die Welle (29) parallel zu einer Tangentenebene zu dem Gurt (13) ist.

5. Förderer nach Anspruch 3 oder 4, dadurch gekennzeichnet, daß jeder Sitz (23) einen fest mit einer entsprechenden Welle (29) verbundenen Rahmen (50) umfaßt, um so mit der Welle (29) um die entsprechende Achse (27) zu rotieren.

6. Förderer nach einem der Ansprüche 2 bis 5, dadurch gekennzeichnet, daß die Wendemittel (46) für jeden Sitz (23) eine Wendeeinrichtung (46) umfassen, die so montiert ist, daß sie mit dem Sitz (23) um die Achse (27) rotiert, wobei Nockenmittel (41) vorgesehen sind, um jede Wendeeinrichtung (46) um 180° um ihre Achse (27) zu rotieren.

7. Förderer nach Anspruch 5, dadurch gekennzeichnet, daß die Wendemittel (46) für jeden Sitz (23) eine an der entsprecheden Welle (29) montierte Wendeeinrichtung (46) umfassen, wobei den Wendeeinrichtungen (46) Nockenmittel (41) zugeordnet sind, die einen Schaltabschnitt (42) umfassen, der mit den Wendeeinrichtungen (46) zusammenwirkt, um diese um 180° um die entsprechende Achse (27) zu rotieren.

8. Förderer nach Anspruch 6 oder 7, dadurch gekennzeichnet, daß jede Wendeeinrichtung (46) eine mit der Achse (27) koaxiale und mit dem entsprechenden Sitz (23) einstückige Nabe (31), sechs mit der Nabe (31) einstückige und gleichmäßig um diese beabstandete radiale Fortsätze (36) sowie an jedem Fortsatz (36) angebrachte und mit den Nockenmitteln (41) zusammenwirkende Stößelmittel (39) umfaßt, wobei der Schaltabschnitt (42) drei aufeinanderfolgende Vorsprünge (44, 45) aufweist, und der Eingriff eines jeden von diesen mit den Stößelmitteln (39) im Gebrauch für das Bewegen der Fortsätze (36) um einen Schritt um die Achse (27) sorgt.

9. Förderer nach Anspruch 8, dadurch gekennzeichnet, daß die Nockenmittel (41) einen weiteren Schaltabschnitt (43) umfassen, der mit den Stößelmitteln (39) jedes Sitzes (23) zusammenwirkt, um so jeden Sitz (23) weiter um 180° und von der umgedrehten Position in die ursprüngliche Position zu rotieren, während sich der Sitz (23) zwischen der Entladestation (18) und der Eingangsstation (11) bewegt.

10. Förderer nach einem der vorhergehenden Ansprüche, dadurch gekennzeichnet, daß jeder Sitz (23) einen mit dem entsprecheden Verbindungsmittel (47) verbundenen Rahmen (50) umfaßt, der zum Aufnehmen einer entsprechenden Packung (6) ringförmig ausgebildet und jeweils mit lösbaren Anhaltemitteln (56, 57) zum axialen Festlegen jeder Packung (6) versehen ist.

11. Förderer nach Anspruch 10, dadurch gekennzeichnet, daß die Anhaltemittel (56, 57) wenigstens eine beweglich und auf einer Seite des Rahmens, die aus dem Förderer selbst nach außen zeigt, wenn sich der Sitz (23) in der umgedrehten Position befindet, mit dem Rahmen (50) verbundene Platte (56, 57) umfassen, wobei Betätigungsmittel (59) vorgesehen sind, um die Platte (56, 57) zwischen einer ersten Arbeitsposition, in welcher die Platte axial mit einer entsprechenden Packung (6) in Wechselwirkung steht, und einer zweiten Position, in welcher die Platte (56, 57) ein freies Passieren des Packung (6) durch den Sitz (23) erlaubt, zu bewegen.

## Revendications

1. Convoyeur de sortie (4) pour machines d'emballage (1) pour des emballages rigides avec couvercle à charnière, le convoyeur (4) étant un convoyeur annulaire comprenant un poste d'entrée (11) destiné à la réception des paquets (6), un poste d'évacuation (18) destiné à l'évacuation des paquets (6) hors du convoyeur (4) un certain nombre de supports (23), chacun de ceux-ci étant destiné à recevoir un paquet (6) respectif au poste d'entrée (11) ; des moyens de connexion (47) destinés à connecter chaque support (23) au convoyeur (4) dans une position respective du convoyeur (4) lui-même ; des premiers moyens de poussée (58) destinés à pousser chaque paquet (6) dans un support (23) respectif au poste d'entrée (11) et dans une première direction sensiblement radiale par rapport au convoyeur (4) lui-même ; et un second moyen de poussée (76) destiné à pousser chaque paquet (6) hors du siège (23) respectif au poste d'évacuation (18) et dans une seconde direction par rapport au convoyeur (4) lui-même : caractérisé par le fait que les moyens de connexion (47) et les moyens de poussée (58, 76) sont conçus de façon telle que les moyens de poussée (58, 76) sont situés en face d'un même côté de chaque support (23), et que la première et la seconde direction sont orientées dans un même sens par rapport à chaque support (23) que l'introduction de chaque paquet dans le support respectif et son évacuation hors dudit support aboutissent lors du fonctionnement au déplacement du paquet (6) en traversant le support (23) sous l'action dudit moyen de poussée (58, 76).

2. Convoyeur selon la revendication 1, caractérisé par le fait que les moyens de conexion (47) permettent de faire tourner chaque support (23) par rapport au convoyeur (4) lui-même et sur un axe respectif (27) s'étendant perpendiculairement au convoyeur (4) ; des moyens de retournement (46) étant installés pour faire tourner chaque support (23) entre une position d'origine dans laquelle ledit paquet (6) est reçu audit poste d'entrée (11) et une position de retournement dans laquelle ledit support (23) est tourné de 180° lorsqu'il se déplace entre lesdits postes d'entrée et d'évacuation (11, 18).

3. Convoyeur selon la revendication 2 comportant ledit élément de transport annulaire (13) pour les supports (23), caractérisé par les moyens de connexion (47) comprenant, pour chaque support (23) des moyens de support (25) formant corps avec l'élément de transport annulaire (13) ; et un arbre (29) perpendiculaire à une direction de déplacement (12) des supports (23) ; l'arbre (29) étant coaxial audit axe (27) et étant connecté aux moyens de support (25) de manière à tourner autour dudit axe (27).

4. Convoyeur selon la revendication 3, caractérisé par le fait que l'élément de transport annulaire (13) est une bande continue (13) se déplaçant axialement ; l'arbre (29) étant parallèle à un plan tangent à ladite bande continue (13).

5. Convoyeur selon la revendication 3 ou 4, caractérisé par le fait que chaque support (23) comprend un cadre (50) relié audit arbre (29) en formant corps avec lui, de manière à tourner avec ledit arbre (29) autour dudit axe (27) respectif.

6. Convoyeur selon l'une quelconque des revendications 2 à 5, caractérisé par le fait que, pour chaque support (23), les moyens de retournement (46) comprennent un dispositif de retournement (46) monté de manière à tourner avec le support (23) autour dudit axe respectif (27) ; des moyens de came (41) étant mis en place afin de faire tourner chaque dispositif de retournement (46) de 180° autour de son axe (27).

7. Convoyeur selon la revendication 5, caractérisé par le fait que, pour chaque support (23), le moyen de retournement (46) comprend un dispositif de retournement (46) monté sur ledit arbre (29) respectif : des moyens de came (41) étant affectés auxdits dispositifs de retournement (46) et comprennent une partie (42) de commutation coopérant avec lesdits dispositifs de retournement (46) en vue de faire tourner ceux-ci de 180° autour de l'axe (27) respectif.

8. Convoyeur selon la revendication 6 ou 7, caractérisé en ce que chaque dispositif de retournement (46) comprend un moyeu (31) coaxial audit axe (27) et formant corps avec ledit support (23) respectif ; six appendices radiaux (36) espacés de façon égale autour du moyeu (31) et faisant corps avec celui-ci ; et des moyens de palpage (39) montés sur chaque appendices (36) et coopérant avec lesdits moyens de came (41) ; ladite partie de commutation (42) comprenant trois saillies successives (44, 45), le contact desquels avec les moyens de palpage (39) provoquant, lors du fonctionnement, le déplacement des appendices (36) d'un pas autour dudit axe (27).

9. Convoyeur selon la revendication 8, caractérisé par le fait que les moyens de came (41) comprennent une autre partie de commutation (43) coopérant avec le moyen de palpage (39) de chaque support (23) de manière à faire à nouveau tourner chaque support (23) de 180° et à l'amener de ladite position de retournement à ladite position d'origine, lorsque ledit support (23) se déplace entre le poste d'évacuation (18) et le poste d'entrée (11).

10. Convoyeur selon l'une quelconque des revendications précédentes, caractérisé par le fait que chaque support (23) comprend un cadre (50) connecté aux moyens de connexion (47) respectifs ; le cadre (50) étant un cadre annulaire (50) destiné à loger un paquet respectif (6) ; et chaque cadre (50) étant muni de moyen d'arrêt libérables (56, 57) en vue de bloquer axialement ledit paquet (6).

11. Convoyeur selon la revendication 10, caractérisé par le fait que lesdits moyens d'arrêt (56, 57) comprennent au moins une plaque (56, 57) montée de manière mobile sur le cadre (50) et sur un côté du cadre (50) orienté vers l'extérieur du convoyeur lui-même lorsque le siège (23) respectif est dans la position de retournement ; des moyens d'actionnement (59) étant installés pour déplacer la plaque (56, 57) entre une première position de fonctionnement dans laquelle le plaque (56, 57) interfère axialement avec un paquet (6) respectif, et une seconde position dans laquelle la plaque (56, 57) permet le libre passage du paquet (6) traversant le support (23).
